# EUROPÄISCHE PATENTANMELDUNG

(11) **EP 1 693 943 A2**
(43) Veröffentlichungstag der Anmeldung: **23.08.2006**
(21) Anmeldenummer: 06101402.3
(22) Anmeldetag: 08.02.2006
(51) Int. Cl.: H02H 3/33

(54) **Vorrichtung zur allstromsensitiven Erfassung eines elektrischen Differenzstromes**

(30) Priorität: 17.02.2005 DE 102005007335
(71) Anmelder: SIEMENS AKTIENGESELLSCHAFT, 80333 München (DE)
(72) Erfinder: Bross, Jürgen, 93138, Lappersdorf (DE); Schmid, Bernhard, 93133, Burglengenfeld (DE)

(57) **Zusammenfassung**

Die Vorrichtung dient zur allstromsensitiven Erfassung eines elektrischen Differenzstromes. Sie umfasst Eingangskontakte (8, 9, 10, 11) und Ausgangskontakte (12, 13, 14, 15) sowie dazwischen verlaufende Primärleiter (16, 17, 18, 19), die hinsichtlich des Differenzstromes überwacht sind und dazu durch einen Durchgangsbereich (4) eines allstromsensitiven Summenstromwandlers (2) hindurchgeführt sind. Eine AuswerteEinheit ist zur Ermittlung des Differenzstromes aus einem Ausgangssignal des Summenstromwandlers (2) vorgesehen. Der Summenstromwandler (2) ist so angeordnet, dass seine Mittenachse (3) parallel zur Richtung des Abstands (15a) zwischen den Reihen der Eingangs- und Ausgangskontakte (8, 9, 10, 11, 12, 13, 14, 15) orientiert ist. Dadurch resultiert ein sehr platzsparender und einfach herzustellender Aufbau.

## Beschreibung

Die Erfindung betrifft eine Vorrichtung zur allstromsensitiven Erfassung eines elektrischen Differenzstromes mit einem Summenstromwandler.

Bei bekannten derartigen Vorrichtungen wird der Differenzstrom durch eine phasenrichtige Addition der in mehreren, beispielsweise in zwei bis vier Primärleitern fließenden Ströme ermittelt. Dies erfolgt mittels eines Summenstromwandlers, der nach dem induktiven Prinzip aufgebaut ist. So lassen sich Wechsel-Differenzströme und pulsierende Gleich-Differenzströme erfassen. Aus der EP 1 267 467 A2 ist eine allstromsensitive Vorrichtung bekannt, die sich auch zur Erfassung von glatten Gleich-Differenzströmen eignet. Der speziell ausgebildete Summenstromwandler umfasst zwei Magnetkerne. Außerdem ist er mit einer elektronischen Einheit beschaltet, die im Hinblick auf die glatten Gleich-Differenzströme eine gezielte Ansteuerung und Auswertung vorsieht.

Aufgrund der beiden Magnetkerne und der zusätzlich benötigten elektronischen Einheit resultiert ein nicht unerheblicher Platzbedarf. So weist eine in der Installationstechnik eingesetzte und als Allstrom-Fehlerstromschutzschalter ausgebildete Vorrichtung eine Bauweise in acht Teilungseinheiten auf. In Schaltschränken oder Stromkästen steht dieser Platz oftmals nicht zur Verfügung. Eine kleinere Bauweise mit nur vier Teilungseinheiten führt aber zu einem deutlich höheren Fertigungsaufwand, der auch durch eine dann ziemlich komplizierte Leiterführung der zu überwachenden Primärleiter innerhalb der Vorrichtung bedingt ist.

Die Aufgabe der Erfindung besteht deshalb darin, eine Vorrichtung zur allstromsensitiven Differenzstromerfassung anzugeben, die wenig Platz beansprucht und einfach herzustellen ist.

Diese Aufgabe wird gelöst durch die Merkmale des unabhängigen Patentanspruchs 1. Die erfindungsgemäße Vorrichtung zur allstromsensitiven Erfassung eines elektrischen Differenzstromes umfasst
a) mindestens zwei in einer ersten Kontaktreihe nebeneinander angeordnete Eingangskontakte und mindestens zwei in einer zweiten Kontaktreihe nebeneinander angeordnete Ausgangskontakte, wobei die beiden Kontaktreihen einen im Wesentlichen konstanten Abstand voneinander aufweisen,
b) mindestens zwei hinsichtlich des Differenzstromes überwachte Primärleiter, die jeweils an einen der Eingangskontakte und an einen der Ausgangskontakte angeschlossen sind,
c) einen allstromsensitiven Summenstromwandler mit einem in Richtung einer Mittenachse verlaufenden zentralen Durchgangsbereich, durch den die Primärleiter geführt sind, und
d) eine Auswerte-Einheit zur Ermittlung des Differenzstromes aus mindestens einem Ausgangssignal des Summenstromwandlers, wobei
e) der Summenstromwandler zwischen den beiden Kontaktreihen angeordnet ist und die Mittenachse in etwa parallel zur Richtung des Abstands zwischen den beiden Kontaktreihen verläuft.

Aufgrund der speziellen Anordnung des insbesondere zylinderförmigen Summenstromwandlers ergibt sich die Möglichkeit zu einer besonders platzsparenden und insbesondere auch einfach herzustellenden Bauweise der Vorrichtung insgesamt. Die in etwa waagerechte, also mit der Wandler-Mittenachse parallel zum Kontaktreihen-Abstand bzw. senkrecht zu den beiden Kontaktreihen orientierte Platzierung des Summenstromwandlers ermöglicht ein einfaches Hindurchführen der Primärleiter durch den Durchgangsbereich und vor allem auch ein einfaches Anschließen der Primärleiter an die jeweils zugehörigen Eingangs- und Ausgangskontakte. Hierzu ist im Bereich der Eingangs- und Ausgangskontakte lediglich ein geringfügiges Umbiegen der Primärleiter erforderlich. Dagegen erübrigen sich aufwändigere Leiterführungen mit scharfen Richtungsumlenkungen bis hin zu Leiterrückführungen, die bei anderen weniger vorteilhaften Platzierungen des Summenstromwandlers auftreten. Damit sinkt der Fertigungsaufwand.

Vorteilhafte Ausgestaltungen der erfindungsgemäßen Vorrichtung ergeben sich aus den Merkmalen der von Anspruch 1 abhängigen Ansprüche.

Günstig ist eine Variante, bei der die zwischen den Eingangskontakten und den Ausgangskontakten verlegten Primärleiter jeweils einstückig ausgebildet sind. Dies vereinfacht die Herstellung und senkt die Kosten.

Weiterhin können die Primärleiter im Bereich des Durchgangsbereichs weitgehend parallel verlaufen und zu beiden Seiten des Durchgangsbereichs jeweils direkt zu den zugehörigen Eingangs- und Ausgangskontakten geführt sein. Dadurch ist der Platzbedarf für die Verlegung und Führung der Primärleiter äußerst gering.

Gemäß einer anderen Variante enthält der Summenstromwandler zwei in Richtung der Mittenachse hintereinander angeordnete Kerne. Dies ermöglicht eine allstromsensitive Differenzstromerfassung und führt zu einer kompakten Bauweise.

Vorzugsweise enthält der Summenstromwandler eine magnetische Wandler-Abschirmung, die eine Störbeeinflussung einer in einer Sekundärwicklung induzierten Spannung durch außerhalb des Summenstromwandlers erzeugte Magnetfelder verhindert. Diese potentiell störenden äußeren Magnetfelder werden zum Beispiel durch eine Primärleiterführung, die außerhalb des Summenstromwandlers von der Mittenachsenrichtung abweicht, oder durch dort vorhandene andere stromdurchflossene Leitungen oder durch benachbarte Baugruppen oder Geräte hervorgerufen. Sie werden wirkungsvoll abgeschirmt. Die magnetische Wandler-Abschirmung verhindert andererseits auch, dass sich ein im Inneren des Summenstromwandlers hervorgerufenes Magnetfeld in nennenswertem Umfang bis in den Außenbereich des Summenstromwandlers erstreckt und dort zu einer Störung von elektronischen Einheiten führt. Außerdem erlaubt eine effektive Abschirmung der Magnetfelder eine höhere Strombelastung in den Primärleitern. Es sind höhere Nennstromwerte möglich.

Bei einer weiteren Ausgestaltung enthält der Summenstromwandler zwei an eine Sekundärwicklung angeschlossene insbesondere metallene Anschlussstifte, die senkrecht zur Mittenachse nach außen vorstehen. Sie bilden einen mechanisch stabilen elektrischen Anschlusspunkt für die nachgeschaltete elektronische Auswertung. Dabei ist es insbesondere günstig, wenn die Auswerte-Einheit eine Flachbaugruppe, beispielsweise eine Platine, enthält, die auf die Anschlussstifte gesetzt und insbesondere angelötet ist. So ergibt sich ein einfacher elektrischer Anschluss und die Auswerte-Einheit lässt sich sehr nah am Summenstromwandler platzieren, wodurch der Platzbedarf sinkt.

Weiterhin kann der Summenstromwandler eine Schottung enthalten, und die Auswerte-Einheit auf der Schottung gelagert und dort insbesondere mittels Schnapphaken befestigt sein. Dann ist der Verbund aus Summenstromwandler und Auswerte-Einheit mechanisch sehr stabil.

Insbesondere ist die Auswerte-Einheit auf einer einer Gehäusewand zugewandten Seite mit einer Gehäuse-Abschirmung versehen. Dies schützt die Auswerte-Einheit vor EMV-Einstrahlungen von außen. Vorzugsweise ist zwischen der Auswerte-Einheit und der Gehäuse-Abschirmung eine elektrische Isolation, wie zum Beispiel eine Isolierfolie, vorgesehen, die Kurzschlüsse zwischen der Auswerte-Einheit und der insbesondere als Blech ausgebildeten Gehäuse-Abschirmung verhindert.

Weitere Merkmale, Vorteile und Einzelheiten der Erfindung ergeben sich aus der nachfolgenden Beschreibung eines Ausführungsbeispieles anhand der Zeichnung. Es zeigt:
- FIG 1: ein Ausführungsbeispiel einer Vorrichtung zur allstromsensitiven Differenzstromerfassung in teilmontiertem Zustand,
- FIG 2: die Vorrichtung gemäß FIG 1 in Draufsicht,
- FIG 3: die Vorrichtung gemäß FIG 1 mit zusätzlich montierter Auswerte-Einheit und
- FIG 4: die Vorrichtung gemäß FIG 3 mit zusätzlich montierter Gehäuse-Abschirmung.

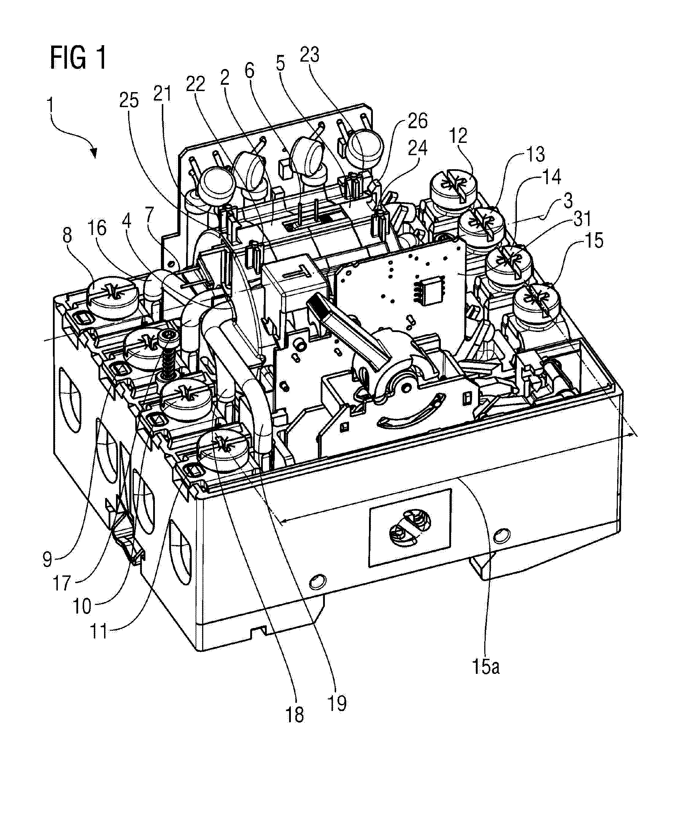

Einander entsprechende Teile sind in den FIG 1 bis 4 mit denselben Bezugszeichen versehen.

Im Folgenden wird unter Bezugnahme auf die FIG 1 bis 4 ein Ausführungsbeispiel einer Vorrichtung 1 zur allstromsensitiven Erfassung eines elektrischen Differenzstromes in Gestalt eines Allstrom-Fehlerstromschutzschalters beschrieben. Allstromsensitiv bedeutet, dass der Frequenzbereich des erfassten Differenzstromes im Bereich zwischen 0 Hz und einigen 10 kHz liegen kann.

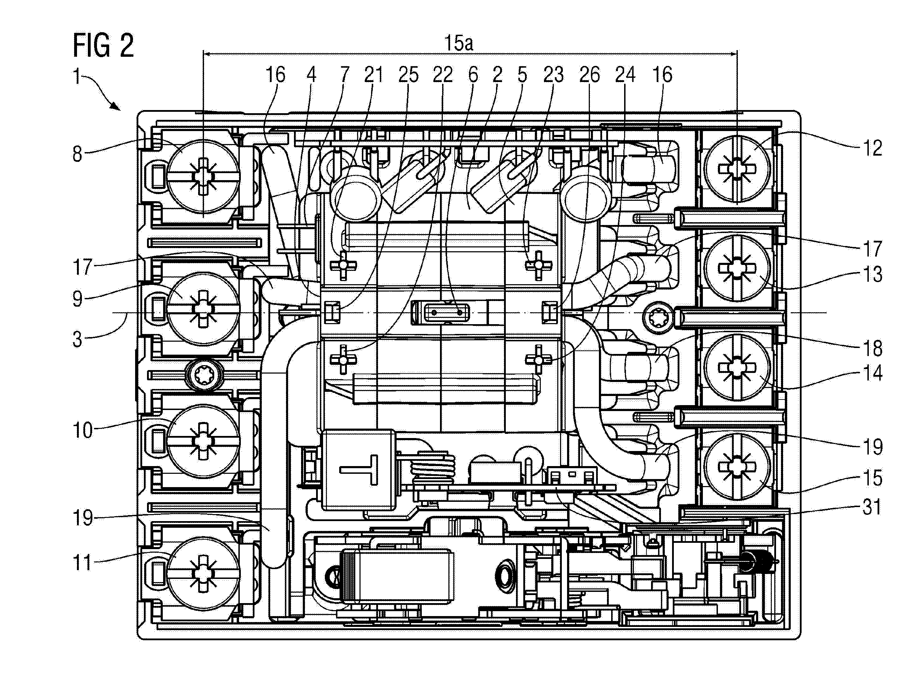

Aus der perspektivischen Ansicht gemäß FIG 1 sowie aus der Draufsicht gemäß FIG 2 geht hervor, dass die Vorrichtung 1 einen in etwa hohlzylindrischen allstromsensitiven Summenstromwandler 2 mit einer Mittenachse 3 und einem zentralen in Richtung der Mittenachse 3 verlaufenden Durchgangsbereich 4 umfasst.

Der Summenstromwandler 2 enthält zwei nicht näher dargestellte Magnetkerne, die unterschiedlich dimensioniert sind und die die Allstromsensitivität der Vorrichtung 1 bedingen. Die Magnetkerne (FI-Kern und DI-Kern) befinden sich innerhalb einer mit 5 bezeichneten Schottung, aus der die metallenen Anschlussstifte 6 und 7 herausgeführt sind. Die losen Enden der auf die beiden Magnetkerne gewickelten Sekundärwicklungen sind elektrisch an die Anschlussstifte 6 und 7 angeschlossen.

Weiterhin hat die Vorrichtung 1 vier Eingangskontakte 8, 9, 10 und 11 und vier Ausgangskontakte 12, 13, 14 und 15. Die Eingangskontakte 8 bis 11 sind auf einer Eingangsseite der Vorrichtung 1 in Reihe nebeneinander angeordnet. Die Ausgangskontakte 12 bis 15 sind ebenfalls nebeneinander in einer Reihe angeordnet. Sie befinden sich auf einer der Eingangsseite gegenüberliegenden Ausgangsseite der Vorrichtung 1. Die Reihen der Eingangskontakte 8 bis 11 und der Ausgangskontakte 12 bis 15 sind in etwa parallel zueinander und weisen einen in etwa konstanten Abstand 15a voneinander auf.

Die Eingangskontakte 8 bis 11 sind mit den Ausgangskontakten 12 bis 15 jeweils mittels eines elektrischen Primärleiters 16, 17, 18 bzw. 19 verbunden. Die Primärleiter 16 bis 19 sind jeweils einstückig ausgebildet. Sie sind durch den Durchgangsbereich 4 des Summenstromwandlers 2 hindurchgeführt. Im Durchgangsbereich 4 ist für jeden der Primärleiter 16 bis 19 ein gesonderter Längskanal vorgesehen. Die Längskanäle und damit auch die darin geführten Primärleiter 16 bis 19 verlaufen parallel zueinander und sind konzentrisch zur Mittenachse 3 angeordnet.

Zu beiden Stirnseiten des Summenstromwandlers 2, also in den Anschlussbereichen, sind die Primärleiter 16 bis 19 auf praktisch direktem Weg an die jeweils zugehörigen Eingangskontakte 8 bis 11 und Ausgangskontakte 12 bis 15 geführt. Die Primärleiter 16 bis 19 sind in diesen Anschlussbereichen beispielsweise mittels Umbiegens entsprechend ausgeformt.

Vorteilhafterweise ist der Summenstromwandler 2 so angeordnet, dass die Mittenachse 3 im Wesentlichen parallel zur Abstandsrichtung, also zur Richtung des Abstands 15a, verläuft. Die Mittenachse 3 ist in etwa senkrecht zu den Reihen der Eingangskontakte 8 bis 11 und der Ausgangskontakte 12 bis 15 orientiert. Diese günstige Ausrichtung des Summenstromwandlers 2 ermöglicht die vorstehend beschriebene besonders einfach herzustellende Leiterführung der Primärleiter 16 bis 19. Diese Leiterführung kommt vor allem ohne Umwege und auch ohne Leiterrückführungen aus, welche ansonsten einen erhöhten Platzbedarf der Vorrichtung 1 zur Folge hätten. Deshalb weist die Vorrichtung 1 trotz der aufgrund der Allstromsensitivität vorgesehenen beiden Magnetkerne und des damit verbundenen größeren Summenstromwandler-Bauvolumens eine vergleichsweise geringe Baugröße auf. So hat sie einen Platzbedarf von nur vier Teilungseinheiten. Dies bedeutet eine Halbierung gegenüber bekannten Allstrom-Fehlerstromschutzschaltern, die üblicherweise in einer Bauweise mit acht Teilungseinheiten ausgeführt sind.

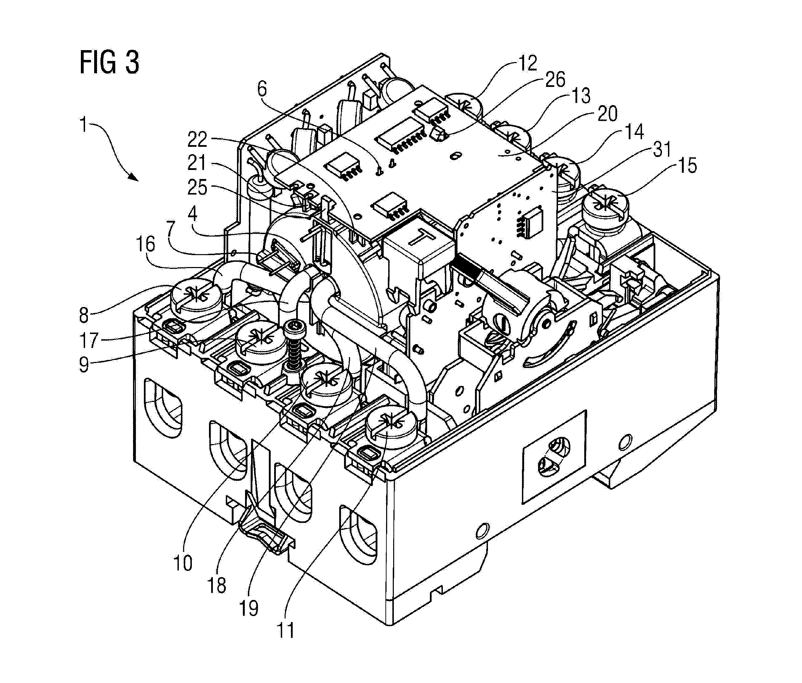

In FIG 3 ist die Vorrichtung 1 in einem verglichen mit FIG 1 späteren Montagezustand gezeigt. Zusätzlich ist eine Auswerte-Einheit 20 montiert. Sie ist als Flachbaugruppe ausgebildet, die eine mit elektrischen und/oder elektronischen Bauteilen bestückte Platine umfasst. Die Auswerte-Einheit 20 ist auf die Anschlussstifte 6 gesetzt und mit diesen mittels einer Lötverbindung elektrisch leitend verbunden. Auch die Anschlussstifte 7 sind mittels nicht dargestellter Leitungen elektrisch an die Auswerte-Einheit 20 angeschlossen. In dem Bereich, in dem die Metallstifte 6 aus der Umfangfläche der Schottung 5 hervorstehen, sind vier Stützen 21, 22, 23 und 24 sowie zwei Schnapphaken 25 und 26 an die Schottung 5 angeformt. Die Platine der Auswerte-Einheit 20 ist auf diesen Stützen 21 bis 24 gelagert. Außerdem wird sie mittels der Schnapphaken 25 und 26 in Position gehalten.

Die Auswerte-Einheit 20 dient zur allstromsensitiven Ermittlung eines Differenzstroms, der bei phasenrichtiger Addition der in den Primärleitern 16 bis 19 fließenden Einzelströme resultiert. Hierzu werden die an den Anschlussstiften 6 und 7 abgreifbaren Ausgangssignale des Summenstromwandlers 2 herangezogen und ausgewertet.

Aufgrund der direkten Lagerung der Auswerte-Einheit 20 auf der Schottung 5 des Stromwandlers 2 ergibt sich eine sehr platzsparende Bauweise. Darüber hinaus sind die Leitungslängen zwischen den Sekundärwicklungen des Summenstromwandlers 2 und der Auswerte-Einheit 20 sehr kurz, so dass sie unempfindlicher gegenüber Störeinstrahlungen sind. Die direkte Anordnung der Auswerte-Einheit 20 auf dem Summenstromwandler 2 ist also auch aus EMV-Gründen sehr vorteilhaft.

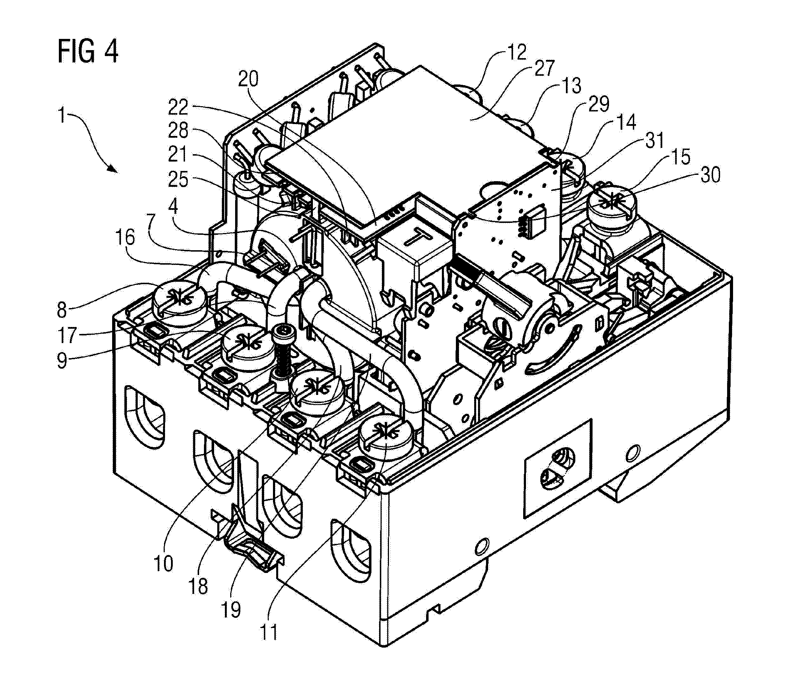

In FIG 4 ist die Vorrichtung 1 in einem weiteren Montagezustand wiedergegeben, bei dem auch eine Gehäuse-Abschirmung 27 eingebaut ist. Sie ist über der Auswerte-Einheit 20 platziert. Zwischen der als Abschirmblech ausgeführten Gehäuse-Abschirmung 27 und der Auswerte-Einheit 20 ist eine elektrische Isolation in Form einer Isolierfolie 28 vorgesehen. Sie verhindert unerwünschte elektrische Kurzschlüsse zwischen der Auswerte-Einheit 20 und der elektrisch leitenden Gehäuse-Abschirmung 27.

Die Gehäuse-Abschirmung 27 ist mittels zweier Fortsätze 29 und 30 an einer weiteren Einheit der Vorrichtung 1, nämlich an einer Stromversorgungseinheit 31, befestigt. Die Stromversorgungseinheit 31 ist im Ausführungsbeispiel eine Netzteilplatine. Grundsätzlich könnte hier aber auch eine andere Einheit oder Platine vorgesehen sein, beispielsweise eine Einheit oder Platine des Überspannungsschutzes. Die mechanische Verbindung zwischen den Fortsätzen 29 und 30 und der Stromversorgungseinheit 31 erfolgt mittels einer Lötverbindung.

Die Gehäuse-Abschirmung 27 befindet sich zwischen der Auswerte-Einheit 20 und einer nicht gezeigten Gehäusewand, die durch einen Gehäusedeckel gebildet ist. Sie schützt die Auswerte-Einheit 20 vor unerwünschten EMV-Einstrahlungen von au-βen. Damit wird eine Fehlfunktion der Auswerte-Einheit 20 vermieden.

Neben der Gehäuse-Abschirmung 27 enthält die Vorrichtung 1 eine weitere Abschirmung im Inneren des Summenstromwandlers 2. Diese nicht näher dargestellte magnetische Wandler-Abschirmung sichert die Funktionstüchtigkeit des Summenstromwandlers 2, der Auswerte-Einheit 20 und damit der Vorrichtung 1 insgesamt. So verhindert sie eine Störbeeinflussung der in den Sekundärwicklungen induzierten Spannungen durch außerhalb des Summenstromwandlers 2 erzeugte Magnetfelder. Weiterhin verhindert die Wandler-Abschirmung eine Störbeeinflussung der elektronischen Einheiten der Vorrichtung 1, also insbesondere auch der Auswerte-Einheit 20, durch die innerhalb des Summenstromwandlers 2 erzeugten Magnetfelder. Die Auswerte-Einheit 20 ist somit vor Störeinstrahlungen von innerhalb und außerhalb der Vorrichtung 1 geschützt.

Insgesamt weist die Vorrichtung 1 eine sehr platzsparende, symmetriefeste und EMV-verträgliche Konstruktion auf. Sie gewährleistet eine zuverlässige allstromsensitive Erfassung eines Differenzstromes, der zwischen den vier Primärleitern 16 bis 19 vorhanden ist.

## Patentansprüche

1. Vorrichtung zur allstromsensitiven Erfassung eines elektrischen Differenzstromes umfassend
a) mindestens zwei in einer ersten Kontaktreihe nebeneinander angeordnete Eingangskontakte (8, 9, 10, 11) und mindestens zwei in einer zweiten Kontaktreihe nebeneinander angeordnete Ausgangskontakte (12, 13, 14, 15), wobei die beiden Kontaktreihen einen im Wesentlichen konstanten Abstand voneinander aufweisen,
b) mindestens zwei hinsichtlich des Differenzstromes überwachte Primärleiter (16, 17, 18, 19), die jeweils an einen der Eingangskontakte (8, 9, 10, 11) und an einen der Ausgangskontakte (12, 13, 14, 15) angeschlossen sind,
c) einen allstromsensitiven Summenstromwandler (2) mit einem in Richtung einer Mittenachse (3) verlaufenden zentralen Durchgangsbereich (4), durch den die Primärleiter (16, 17, 18, 19) geführt sind, und
d) eine Auswerte-Einheit (20) zur Ermittlung des Differenzstromes aus mindestens einem Ausgangssignal des Summenstromwandlers (2), wobei
e) der Summenstromwandler (2) zwischen den beiden Kontaktreihen angeordnet ist und die Mittenachse (3) in etwa parallel zur Richtung des Abstands (15a) zwischen den beiden Kontaktreihen verläuft.

2. Vorrichtung nach Anspruch 1, **dadurch** g e k e n n z e i c h - ne t, dass die zwischen den Eingangskontakten (8, 9, 10, 11) und den Ausgangskontakten (12, 13, 14, 15) verlegten Primärleiter (16, 17, 18, 19) jeweils einstückig ausgebildet sind.

3. Vorrichtung nach Anspruch 1 oder 2, **dadurch** g e k e n n - zeichnet, dass die Primärleiter (16, 17, 18, 19) im Bereich des Durchgangsbereichs (4) weitgehend parallel verlaufen und zu beiden Seiten des Durchgangsbereichs (4) jeweils direkt zu den zugehörigen Eingangs- und Ausgangskontakten (8, 9, 10, 11, 12, 13, 14, 15) geführt sind.

4. Vorrichtung nach einem der vorhergehenden Ansprüche, **dadurch gekennzeichnet, dass** der Summenstromwandler (2) zwei in Richtung der Mittenachse (3) hintereinander angeordnete Kerne enthält.

5. Vorrichtung nach einem der vorhergehenden Ansprüche, d a - durch **gekennzeichnet**, dass der Summenstromwandler (2) eine magnetische Wandler-Abschirmung enthält.

6. Vorrichtung nach einem der vorhergehenden Ansprüche, **dadurch gekennzeichnet, dass** der Summenstromwandler (2) zwei an eine Sekundärwicklung angeschlossene Anschlussstifte (6) enthält, die senkrecht zur Mittenachse (3) nach außen vorstehen.

7. Vorrichtung nach Anspruch 6, **dadurch** g e k e n n z e i c h - net, dass die Auswerte-Einheit (20) eine Flachbaugruppe enthält, die auf die Anschlussstifte (6) gesetzt ist.

8. Vorrichtung nach einem der vorhergehenden Ansprüche, d a - durch **gekennzeichnet**, dass der Summenstromwandler (2) eine Schottung (5) enthält, und die Auswerte-Einheit (20) auf der Schottung (5) gelagert und dort insbesondere mittels Schnapphaken (25, 26) befestigt ist.

9. Vorrichtung nach einem der vorhergehenden Ansprüche, d a - durch **gekennzeichnet**, dass die Auswerte-Einheit (20) auf einer einer Gehäusewand zugewandten Seite mit einer Gehäuse-Abschirmung (27) versehen ist.

10. Vorrichtung nach Anspruch 9, **dadurch** g e k e n n - zeichnet, dass zwischen der Auswerte-Einheit (20) und der Gehäuse-Abschirmung (27) eine elektrische Isolation (28) vorgesehen ist.
